# EUROPEAN PATENT APPLICATION

(11) **EP 0 571 665 A1**
(43) Date of publication of application: **01.12.1993**
(21) Application number: 92201480.8
(22) Date of filing: 23.05.1992
(51) Int. Cl.: B62D 33/02

(54) **Device for blocking the sideboards or tailboards of industrial vehicle bodies**

(71) Applicant: O.M.D.A.C.I. S.r.l., I-23022 Chiavenna (Sondrio) (IT)
(72) Inventor: De Giambattista, Gianfranco, I-23020 Prata Camportaccio (Sondrio) (IT)
(74) Representative: Riccardi, Sergio

(57) **Abstract**

A device is described which allows locking of the tailboard and sideboards of bodies of industrial vehicles, applied removably to the load-carrying platform, in order to allow easy application as well as secure attachment to the carrying frame also allowing only overturning for moving goods.

## Description

This invention refers to a mechanical device which allows the application, removal and overturning of the sideboard or tailboard of industrial vehicles.

It is known that all industrial vehicles suitable for transporting goods require dismantling and attachment of tailboards or sideboards to the load-carrying platform, as well as overturning them for easy access to the platform where the goods are arranged.

Said tailboards or sideboards are generally attached with hinges fixed to the edge of the load-carrying platform so that only overturning is possible but not removal of the whole sideboard or tailboard for easy moving of goods or for using the industrial vehicle for special transport with the platform open. Some mechanical devices also exist consisting of piston elements controlled by a longitudinal bar, having a return spring, which are welded to the cross members of the body or two main side members with the disadvantage of having to intervene on a structural carrying part of the industrial vehicle with cuts and welding, which can sometimes weaken the said structure.

Another device currently existing on the market is constituted by a box-shaped body with enclosed command levers, actuating two upper rods and a lower rod, having counter-reaction springs. Furthermore, the joint of the upper pins provides for the adoption of female seats applied in the hoops of the tailboard or sideboard, the coupling being embedded at the front in the casing. The above-mentioned device is therefore fairly heavy given the high number of mechanical components and levers and cannot be easily applied as the special eyelets must be fixed to the hoops of the tailboard or sideboards for inserting the heads of the blocking rods.

These problems find the right correct technical solution, together with other advantages in this invention which allows the attachment of tailboards and sideboards to the load-carrying platform rapidly and securely and without interfering in any way with the carrying structure of the body with cuts, modifications or welding.

In practice, it consists of a box-like post which can be coupled to a fastening element applied to the external framework of the motor vehicle body and can be integrated with its structure forming a overturnable and removable tailboard or sideboard.

These and other special characteristics will be shown even more clearly in the following detailed description, in a preferred form of embodiment, carried out purely as an example and not limiting the scope of the invention, and with the aid of various figures on the attached sheets of illustrative drawings, in which:
Figure 1 shows a perspective view of the whole of the device in the object;
Figure 2 shows a sectional view in profile of the device in question, in the locked position of the tailboard or sideboard;
Figure 3 shows a sectional view in profile of the device in question, showing the position of the handle for unlocking the tailboard or sideboard;
Figure 4 shows a rear view of the device in question, showing the resting surface for the restraint of the tailboard or sideboard structure;
Figure 5 shows a rear view without the containing plate to show the various internal mechanical components;
Figure 6 shows a profile and front sectional view of the locking detail for the tailboard;
Figure 7 shows a profile and front sectional view of the locking detail of the sideboards;
Figure 8 shows a schematic view of the device in question applied to a frame of the body of an industrial motor vehicle, in the vertical locked position;
Figure 9 shows the same detail as Figure 8 in a completely overturned position; and
Figure 10 shows a schematic view of the device, in a possible horizontal application.

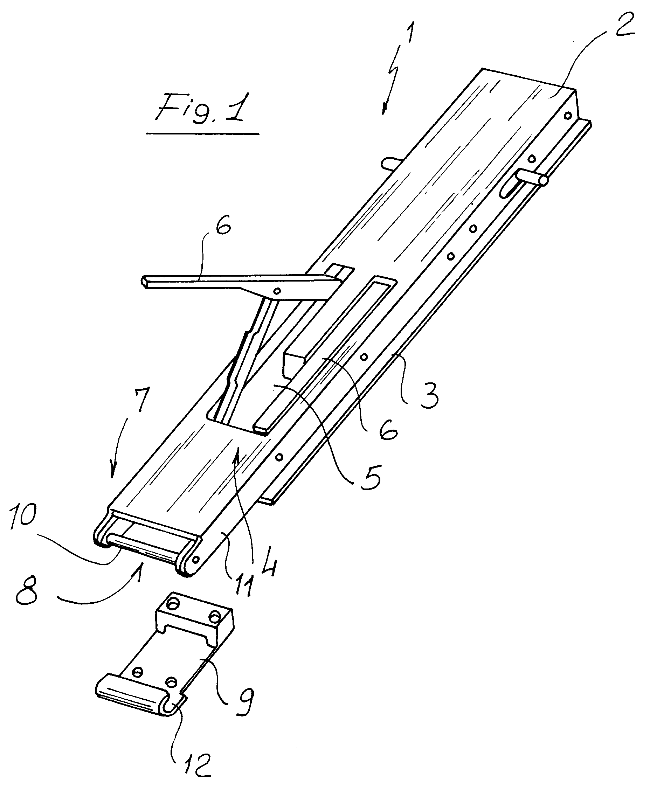

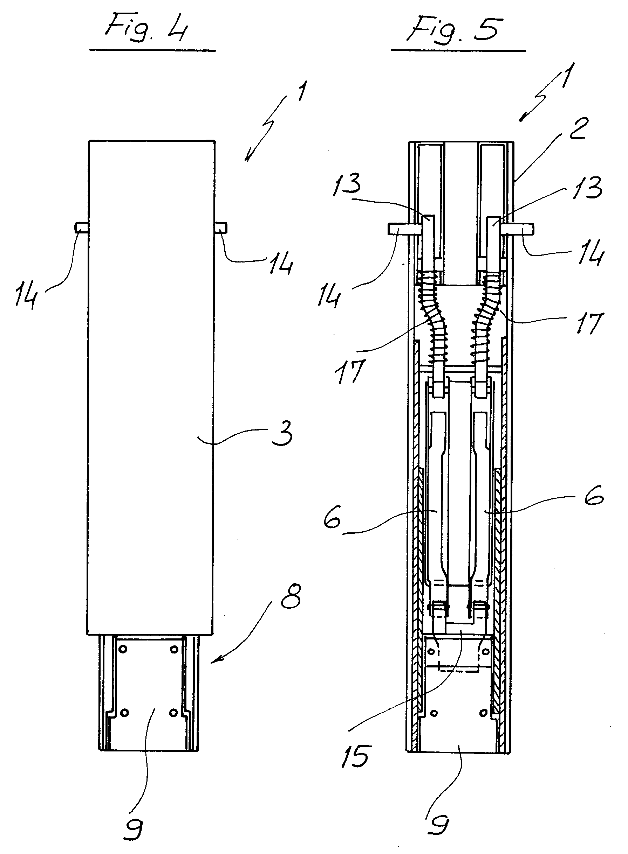

With reference to Figures 1 and 4, the device 1 in object has a box-like body 2 made from a mould preferably in aluminium, to which a flat element 3 is fixed at the rear functioning as a rear closure and attachment flange to the tailboard of the motor vehicle. In the front part 4, is the rectangular and shaped opening 5 which allows the handling of the mechanical control lever 6 and at the same time functions as their resting cavity flush with the casing.

In the lower part 7 is the rear seat 8 for the concealed housing of the hinge 9, whose pin 10 is found on the tip of the shoulder 11 of the box-like body 2.

Said hinge 9 is fixed by means of threaded elements to the cross-members or to the main side members of the structure of the load-carrying platform.

It has the seat 12 for the pin 10 with open lip to allow the unlocking of the device constituting the object by moving the command lever in order to apply and remove the sideboards and tailboard.

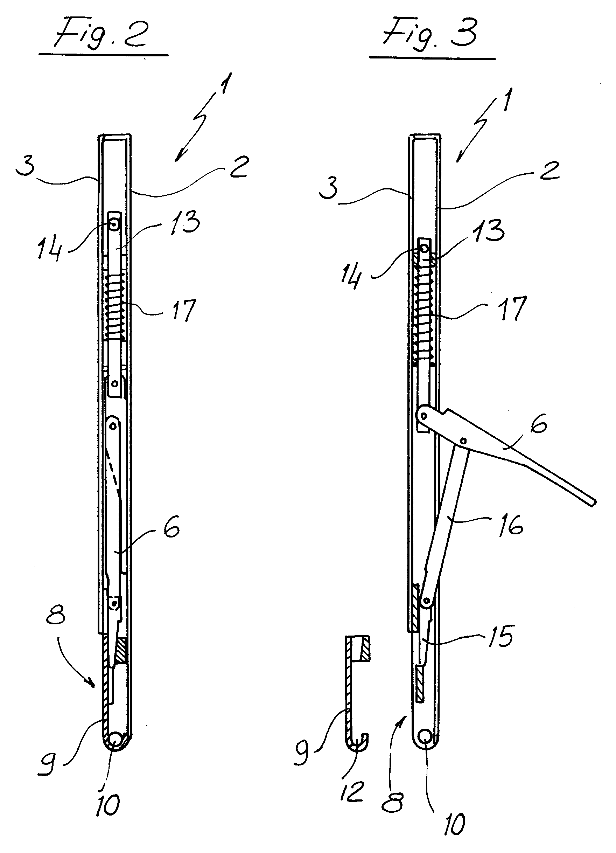

With reference to Figures 2, 3 and 5, to activate only the mechanism for overturning the sideboards or tailboard, the two control levers 6 are actuated separately to lower the two rods 13 unlocking the locking pins 14, while for unlocking the tailboard or sideboards from the hinge 9 one of the two control levers 6 is moved up further which acts on the locking plate 15 of the pin 10 of the hinge.

For this last phase, both the control levers 6, are connected to a single locking plate 15 of the hinge 9 by suitable transmission means 16 and for this reason it is sufficient to use only and either one of the levers.

There are also counter springs 17 along the axis of the two upper rods 13 to facilitate the closing effort of the mechanism.

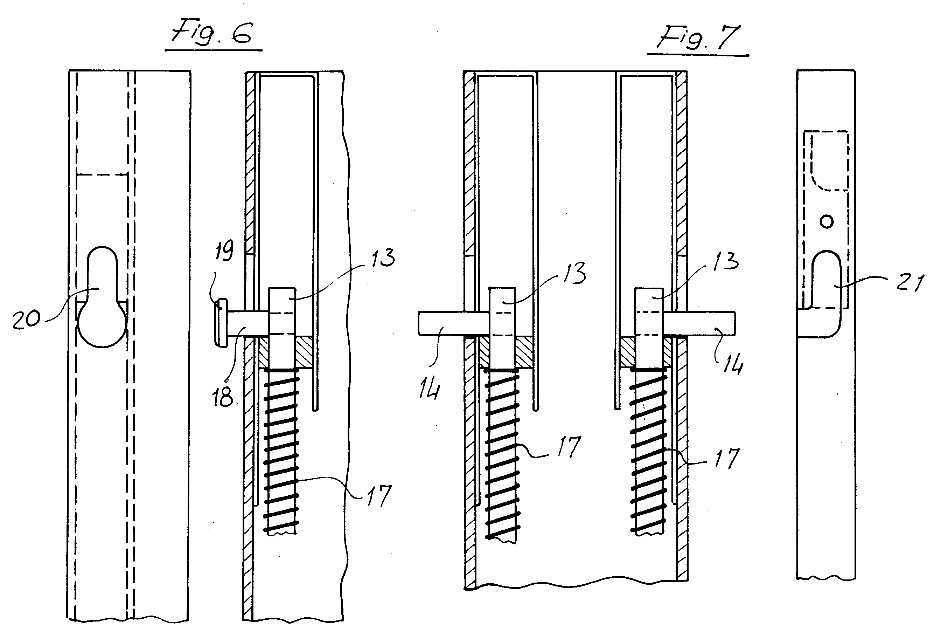

As shown in Figures 6 and 7, to lock the tailboard, there is a pin 18 with an external shaped part 19 of greater diameter, interacting with the vertically developed eyelet 20 in the angular post of the body; for the locking of the sideboards there is a smooth pin 14 that cooperates with eyelet 21 with a horizontal slot and a vertical development.

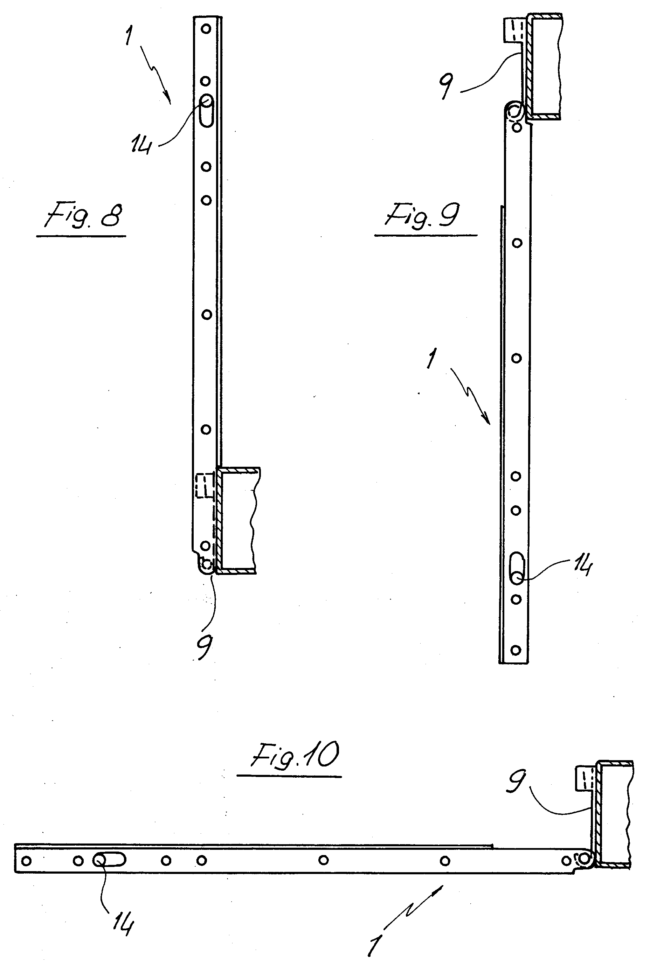

With reference to Figures 8, 9 and 10, it must be emphasized that this device 1 may be applied in either a horizontal or vertical position, without any structural and functional change, thus also for applying side-boards or tailboards which open like a book.

From this detailed description it can be understood that this invention, due to the reduced number of components, its lower total weight, greater ease of functioning and its adaptability of use, shows how it much more the design is for applying and locking containing sideboards and tailboards to load-carrying platforms of industrial motor vehicles.

Finally, one must emphasize the fact that numerous modifications, additions, variations and substitutions of elements can be brought to this invention without altering either its spirit or its object and without leaving its scope of protection as is also defined in the appended claims.

## Claims

1. Device for locking the tailboards and sideboards of industrial vehicle bodies characterized in that it essentially comprises a series of levers able to allow the activation of the locking rods and at the same time unlock the said device from the hinge axis for the removal of said sideboards or tailboards, in order to facilitate the movement of goods on the load-carrying platform.

2. Device according to claim 1, characterized in that said rods for locking the sideboards, each comprise an orthogonal pin functioning as a true and proper stop when it interacts with the relative slots in the posts of the platform.

3. Device according to claim 1, characterized in that for the locking of the tailboards, the rods have two pins with a cylindrical head of a greater diameter, which interact with the eyelet slots on the posts of the body.

4. Device according to claim 1, characterized in that the hinge is obtained by means use of a locking element to apply to the cross members or main side members of traverses of the industrial vehicle body.

5. Device according to claim 4, characterized in that said hinge is with an open lip to allow the complete unlocking of the post in question, when one must remove the sideboards and tailboards for moving the goods or for using the motor vehicles for transport with an open load-carrying platform.

6. Device according to claim 1, characterized in that the locking of the tailboard and sideboards is by the action of handles which interact with the locking rods, each with its own corresponding pin.

7. Device according to claim 1, characterized in that said control handle, after the unlocking position of the sideboards and tailboard, interacts with the plate to ensure connection between the platform and the hinge.
